**Europäisches Patentamt**

**European Patent Office**

**Office européen des brevets**

(19)

(11) Numéro de publication : **0 017 573**
**B1**

(12)

# FASCICULE DE BREVET EUROPÉEN

(45) Date de publication du fascicule du brevet :
**11.05.83**

(51) Int. Cl.³ : **C 25 B 15/08**

(21) Numéro de dépôt : **80400422.4**

(22) Date de dépôt : **28.03.80**

(54) **Installation d'électrolyse de l'eau à circuits d'électrolyte régulés en pression.**

(30) Priorité : **02.04.79 FR 7908694**

(43) Date de publication de la demande :
**15.10.80 Bulletin 80/21**

(45) Mention de la délivrance du brevet :
**11.05.83 Bulletin 83/19**

(84) Etats contractants désignés :
**AT BE CH DE GB IT NL SE**

(56) Documents cités :
**CH A 290 288**
**GB A 362 219**
**GB A 1 124 941**

(73) Titulaire : **CREUSOT-LOIRE**
**42 rue d'Anjou**
**F-75008 Paris (FR)**

(72) Inventeur : **Pere, Gérard**
**6 rue d'Essertenne**
**F-71670 Le Breuil (FR)**

(74) Mandataire : **Dupuy, Louis et al**
**CREUSOT-LOIRE 15 rue Pasquier**
**F-75383 Paris Cedex 8 (FR)**

Jouve, 18, rue St-Denis, 75001 Paris, France

Installation d'électrolyse de l'eau à circuits d'électrolyte régulés en pression

La présente invention se rapporte à une installation d'électrolyse, telle qu'une installation destinée à la production industrielle d'hydrogène et d'oxygène par électrolyse de l'eau sous pression.

Les électrolyseurs équipant ce genre d'installation sont munis de diaphragmes destinés à séparer, dans chaque cellule d'électrolyse, les circuits d'anolyte et de catholyte. Ces diaphragmes, généralement réalisés en amiante ou en reps de nickel, sont légers, relativement poreux, et de faible tenue mécanique. Une différence de pression qui apparaîtrait entre les circuits d'anolyte et de catholyte, donc de part et d'autre de chaque diaphragme, risquerait d'entraîner des fissures dans ces diaphragmes. Ces fissures, associées à la porosité normale de ces diaphragmes, entraîneraient un passage des gaz d'un compartiment dans l'autre, avec formation de mélanges d'autant plus explosifs que l'on est à hautes pression et température.

Il est donc indispensable de munir les installations d'électrolyse, et particulièrement celles fonctionnant sous forte pression et haute température, de dispositifs de régulation destinés à éviter les écarts de pression de part et d'autre des diaphragmes.

On a déjà pensé dans ce but, tel qu'il est par exemple décrit dans le brevet britannique 362 219, à munir l'installation d'électrolyse de dispositifs égaliseurs de pression situés en aval des dégazeurs, d'une part dans les deux circuits de retour d'électrolyte, et d'autre part dans les circuits d'évacuation des gaz extraits par des dispositifs d'égalisation à tubes en U. De tels dispositifs ne peuvent toutefois pas satisfaire aux exigences actuelles relatives à la sécurité, ainsi que celles relatives à la pureté des gaz extraits de l'installation d'électrolyse.

En effet, des égaliseurs placés dans les circuits de retour d'électrolyte ne peuvent que permettre d'égaliser les pressions d'entrée dans l'électrolyseur. Or, une différence dans les pressions de sortie dans les dégazeurs se traduira nécessairement, en raison de la porosité des diaphragmes, par un passage immédiat de liquide électrolytique d'un compartiment dans l'autre. L'utilisation de dispositifs égaliseurs à tubes en U dans les circuits d'extraction des gaz n'est pas une solution satisfaisante, car elle ne réagit qu'à de relativement faibles écarts de pression en aval de l'installation d'extraction. Par contre, en cas de rupture de vanne d'un côté des circuits d'extraction des gaz, ces dispositifs à tubes en U seront impuissants, même en cas d'utilisation de mercure, à empêcher une transmission de surpression dans un des dégazeurs, entraînant un mélange des gaz hydrogène et oxygène à l'état pur, avec les risques d'explosion qui en découlent.

L'installation d'électrolyse conforme à l'invention est du type comportant, de manière classique, au moins un électrolyseur à diaphragme muni d'au moins une sortie d'anolyte et d'au moins une sortie de catholyte, chacune desdites sorties étant reliée à un dégazeur respectif, et est équipée de moyens de régulation permettant, de manière particulièrement simple et efficace, d'éviter les écarts de pression de part et d'autre des diaphragmes équipant l'électrolyseur. Elle est caractérisée en ce qu'elle comporte en outre, sur chacun des circuits reliant lesdites sorties à leurs dégazeurs respectifs, un dispositif du type pompe volumétrique pour la commande de débit d'électrolyte, chaque dispositif de commande de débit d'anolyte étant accouplé au dispositif correspondant de commande de débit de catholyte, et vice-versa, par une liaison entraînant, pour ces deux dispositifs de commande de débit, des variations concomitantes des débits et l'égalisation des pressions de part et d'autre dudit diaphragme.

L'invention sera mieux comprise à l'aide de la description suivante de quelques exemples non limitatifs de réalisation, en référence aux dessins annexés dans lesquels :

les figures 1 et 2 représentent schématiquement un exemple de réalisation d'un dispositif de régulation de débits d'électrolyse destiné à équiper une installation d'électrolyse conforme à l'invention, la figure 1 étant une coupe suivant la ligne BB' de la figure 2, et la figure 2 une coupe suivant la ligne AA' de la figure 1 ;

la figure 3 représente schématiquement un premier exemple de réalisation d'une installation d'électrolyse conforme à l'invention ;

la figure 4 représente schématiquement un second exemple de réalisation d'une installation d'électrolyse conforme à l'invention ;

la figure 5 représente schématiquement une variante de réalisation de l'installation d'électrolyse de la figure 3.

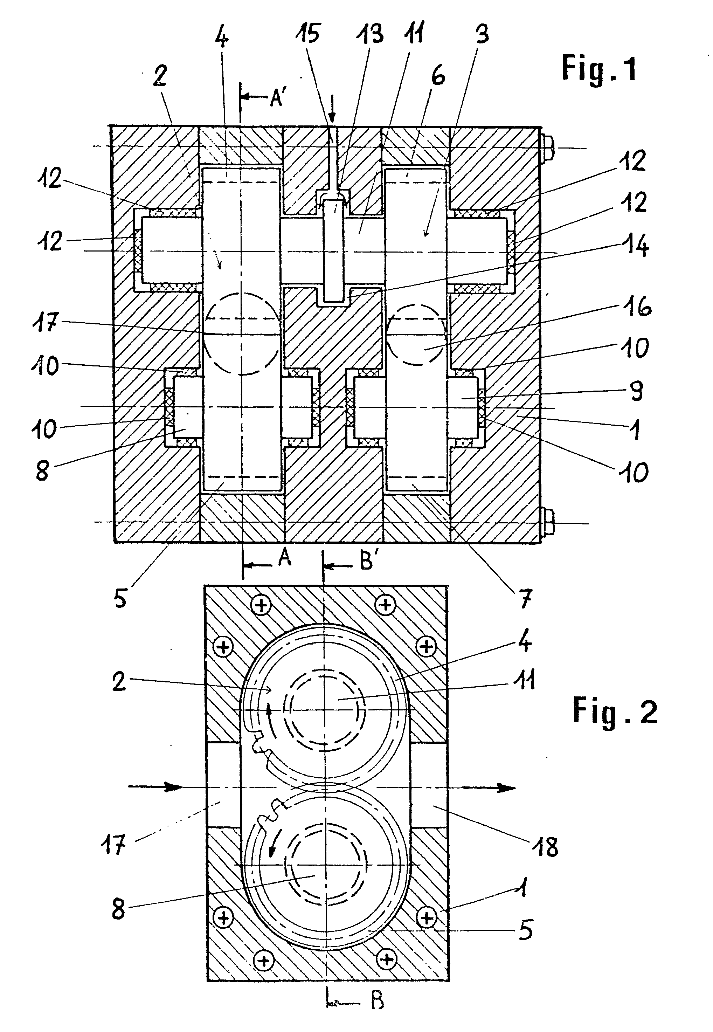

En se reportant tout d'abord à l'ensemble des figures 1 et 2, le dispositif de régulation de débit d'électrolyse représenté comporte, enfermés dans un boîtier commun 1, deux dispositifs volumétriques de commande de débit (2, 3), constitués chacun par deux roues dentées (4, 5 et 6, 7) s'engrenant l'une dans l'autre à la manière des roues dentées équipant les pompes volumétriques à engrenages. Les roues inférieures (5, 7) sont chacune montées folles sur des arbres (8, 9) indépendants, montés chacun sur des bagues de roulement 10, en polytétrafluoréthylène par exemple. Les roues supérieures (2, 3) sont montées sur un même arbre 11 lui-même porté par des bagues de roulement 12 en polytétrafluoréthylène. L'arbre 11 est muni en son milieu d'un collet 13, la partie de l'arbre 11 située entre les roues 2 et 3, ainsi que ledit collet 13 étant placés dans une chambre 14 reliée à l'extérieur par une entrée d'eau 15 destinée à assurer l'étanchéité entre les circuits d'anolyte et de catholyte. L'électrolyte entre à la partie inférieure du boîtier 1 par des entrées respectives (17, 16) pour le catholyte et l'anolyte, et en sort à la partie supérieure dudit boîtier également par des sorties respectives telles que la sortie 18 apparaissant sur la figure 2. Par ailleurs, comme on le voit sur la figure 1, les épaisseurs des roues dentées sont différentes pour chacun des deux circuits d'électrolyte, et sont ajustées conformément au rapport des débits devant exister dans ces deux circuits ; par exemple elles sont dans le rapport (2/3, 1/3) dans le cas de l'électrolyse de l'eau.

Comme on le voit sur les dessins, l'ensemble 2 forme un dispositif volumétrique de commande de débit de catholyte, alors que l'ensemble 3 forme un dispositif volumétrique de commande de débit d'anolyte. Les dispositifs 2 et 3 étant accouplés mécaniquement par l'arbre 11, toute variation de débit dans l'ensemble 2 entraîne une variation de débit de même rapport dans l'ensemble 3 et vice-versa de sorte que, si à l'origine les pressions dans les circuits d'anolyte et de catholyte sont les mêmes, toutes variations de pression dans un de ces circuits entraînera une même variation de pression dans l'autre circuit, et il n'y aura donc jamais apparition d'une différence de pression entre les deux.

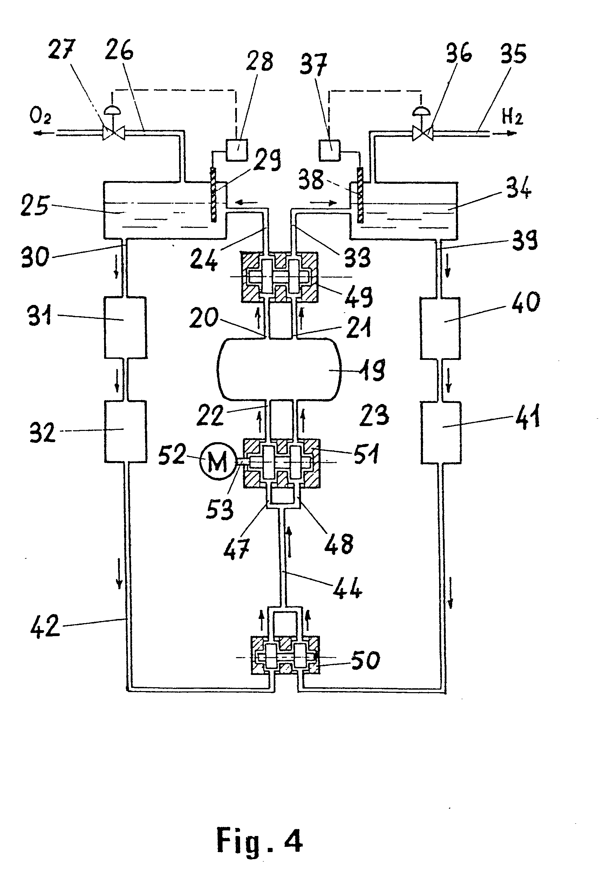

Le régulateur des figures 1 et 2 peut aussi être utilisé en pompe volumétrique sans perdre ses fonctions de régulation. Pour ceci, il suffira d'accoupler l'arbre 11 à un moteur extérieur au boîtier 1, comme il sera expliqué ci-après en référence à la figure 4.

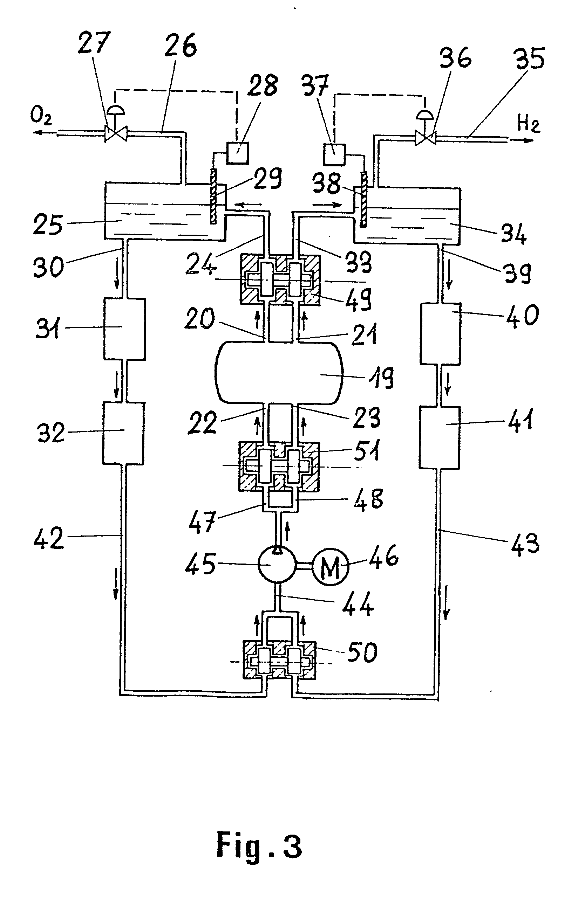

Sur la figure 3 qui schématise une installation d'électrolyse de l'eau sous pression conforme à l'invention, on a désigné par la référence 19 l'électrolyseur équipant l'installation muni, de manière classique, d'une sortie d'anolyte 20, d'une sortie de catholyte 21, ainsi que d'une entrée 22 d'électrolyte destiné aux compartiments anodiques et d'une entrée 23 d'électrolyte destiné aux compartiments cathodiques.

De manière classique également, l'anolyte issu de 20 est amené, par l'intermédiaire d'un circuit 24 vers un dégazeur d'anolyte 25 dont l'oxygène est extrait par l'intermédiaire d'une conduite de sortie de gaz 26. Sur la conduite 26 est placée une soupape 27 dont l'ouverture est commandée par un transmetteur de niveau 28 relié à une sonde 29 placée dans le dégazeur : de manière connue en soi, on assure ainsi un niveau d'électrolyte dans le dégazeur compris entre deux limites données. De manière classique également, l'anolyte dégazé est extrait du dégazeur 25 par une sortie 30, et passe dans un circuit réfrigérant 31 et un filtre 32.

De même, et de façon symétrique, le catholyte sortant de l'électrolyseur 19 en 21 passe successivement dans un circuit de liaison 33, un dégazeur de catholyte 34, lui-même muni d'une conduite de sortie d'hydrogène 35 et d'une soupape 36 commandée par l'intermédiaire d'un transmetteur de niveau 37 relié à une sonde 38, puis sort du dégazeur 34 par la sortie 39, et traverse le circuit réfrigérant 40 et le filtre 41. De façon également classique enfin, les deux circuits (42, 43) d'électrolyte issus des filtres 32 et 41 sont réunis sur une seule conduite 44 afin d'obtenir pour l'électrolyte la concentration initiale en potasse. L'électrolyte passe ensuite dans une pompe centrifuge 45 entraînée par un moteur 46, puis est à nouveau séparé en deux circuits 48 et 47 dont les conduites sont dans le rapport de sections (2/3, 1/3) désiré pour les entrées 23 et 22 dans l'électrolyseur 19.

Conformément à l'invention, un dispositif de régulation de débits 49 tel que décrit précédemment en référence aux figures 1 et 2 est placé sur les circuits 24 et 33 entre l'électrolyseur 19 et les dégazeurs 25 et 34. Le régulateur 49 permet d'obtenir des variations de débit concomitantes pour l'anolyte et le catholyte, de sorte que l'on n'aura jamais de différence de pression entre les compartiments des cellules d'électrolyse de l'électrolyseur 19, donc jamais d'effort mécanique sur les diaphragmes équipant ces cellules.

Par ailleurs, suivant une caractéristique complémentaire avantageuse de l'invention, les circuits de retour 42 et 43 sont réunis en un seul en 44 à travers un régulateur 50 identique au régulateur 49, qui a pour rôle de supprimer les différences de pression qui pourraient apparaître dans lesdits circuits de retour en raison d'un encrassement différent des filtres 32 et 41. En outre, et de manière également avantageuse, un troisième régulateur 51 identique aux deux précédents est placé sur les conduites de répartition 47 et 48 et sert à assurer une bonne répartition de l'électrolyte ainsi qu'à tranquilliser son écoulement.

Enfin, les trois régulateurs 49, 50, 51 ont chacun une intéressante fonction d'isolation entre les différents circuits de l'installation qu'ils séparent : une variation apparaissant en aval de l'un de ceux-ci ne se transmettra pas en amont de celui-ci. Par exemple, une variation apparaissant dans les dégazeurs 25 et/ou 34 ne sera pas répercutée dans l'électrolyseur 19. De même, le répartiteur 51 permet d'isoler la pompe 45 de l'électrolyseur 19 et le répartiteur 50 permet d'isoler le circuit de réunion 44 des circuits de retour 42 et 43.

La figure 4 schématise une installation d'électrolyse du type précédemment décrit en référence à la figure 3. Toutefois, la fonction de pompage est assurée par le régulateur 51 lui-même, accouplé alors à un moteur d'entraînement 52 par une liaison mécanique 53 traversant son boîtier. Dans cette réalisation, la pompe 45 et son moteur d'entraînement 46 peuvent être avantageusement supprimés en conséquence.

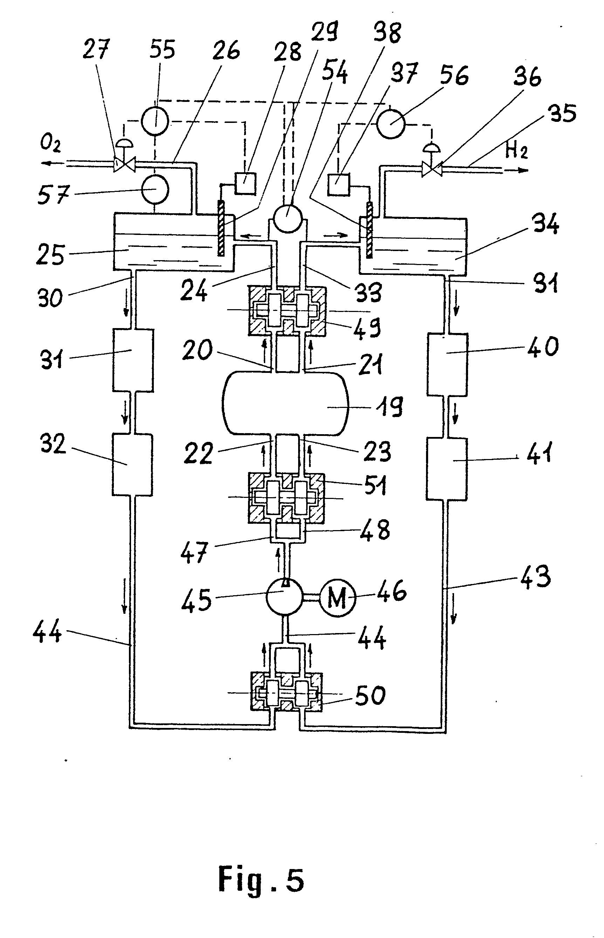

La figure 5 représente schématiquement une variante de l'installation d'électrolyse de la figure 3, munie, par rapport à cette dernière, de dispositifs de régulation classiques complémentaires permettant d'assurer une sécurité et d'améliorer la régulation en pression de l'ensemble. Dans ce but, les circuits 24 et 33 sont reliés à un transmetteur de pressions différentiel 54. Le transmetteur différentiel 54 est relié aux soupapes 27 et 36 de la même façon que les transmetteurs de niveau 28 et 37, par l'intermédiaire de sélecteurs de signaux 55 et 56 fonctionnant en circuits « OU » et agit sur l'ouverture et la fermeture de celles-ci. Par ailleurs, et de manière classique également, un transmetteur de pression 57 est connecté au dégazeur 25 et agit également sur la soupape 27 à travers le sélecteur 55. L'action du transmetteur de pression 57 est répercutée sur le dégazeur 34 par l'intermédiaire du régulateur 49 de l'invention.

Les régulateurs mécaniques (49, 50, 51) équipant les installations conformes à l'invention peuvent avantageusement être en outre utilisés à des fins de mesure et éventuellement de sécurité. Il est en effet aisé de mesurer simplement les débits d'électrolyte, et de suivre par exemple ainsi les évolutions du rendement de l'électrolyseur, en captant la vitesse de rotation des arbres des roues dentées.

Par ailleurs, il est possible d'assurer une sécurité en plaçant plusieurs régulateurs de l'invention en parallèle sur un même circuit : si l'un des régulateurs se bloque, la vitesse des autres augmentera, ce qui permettra de détecter la panne sans qu'il y ait interruption du circuit.

L'invention trouve son utilisation dans le domaine de la production industrielle d'hydrogène et d'oxygène par électrolyse de l'eau sous pression.

**Revendications**

1. Installation d'électrolyse du type comportant au moins un électrolyseur à diaphragme muni d'au moins une sortie d'anolyte et d'au moins une sortie de catholyte reliées chacune à un dégazeur respectif, caractérisée en ce qu'elle comporte en outre, sur chacun des circuits (24-33) reliant lesdites sorties (20-21) à leurs dégazeurs (25-34) respectifs, un dispositif du type pompe volumétrique (49) pour la commande de débit d'électrolyte, chaque dispositif de commande (3) de débit d'anolyte étant accouplé au dispositif correspondant (2) de commande de débit de catholyte, et vice-versa, par une liaison (11) entraînant, pour ces deux dispositifs de commande de débit, des variations concomitantes des débits et l'égalisation des pressions de part et d'autre dudit diaphragme.

2. Installation d'électrolyse selon la revendication 1, caractérisée en ce que ladite liaison (11) d'accouplement est une liaison mécanique.

3. Installation d'électrolyse selon la revendication 2, caractérisée en ce que chacun desdits dispositifs de commande (2-3) de débit comporte au moins un élément rotatif, et en ce que ladite liaison d'accouplement est effectuée par au moins un arbre commun (11) à deux éléments rotatifs (4-6) correspondants de chaque dispositif de commande de débit.

4. Installation d'électrolyse selon la revendication 3, caractérisée en ce que chacun desdits dispositifs de commande de débit comporte au moins deux roues dentées (4-5 ; 6-7) s'engrenant l'une dans l'autre et en ce que ladite liaison mécanique est constituée par au moins un arbre commun aux roues correspondantes du dispositif de commande de débit d'anolyte et du dispositif de commande de débit de catholyte.

5. Installation d'électrolyse selon l'une quelconque des revendications 1 à 4, caractérisée en ce qu'en outre les circuits de retour d'électrolyte des dégazeurs (25-34) vers l'électrolyseur (19) sont équipés d'un ou plusieurs dispositifs de régulation (50-51) comportant, sur chacun des circuits d'électrolyte situé du côté anolyte et du côté catholyte respectivement, un dispositif de commande de débit, ces deux dispositifs étant accouplés par une liaison entraînant pour ceux-ci des variations concomitantes.

6. Installation d'électrolyse selon la revendication 5, caractérisée en ce qu'au moins un desdits dispositifs (51) de régulation est placé à l'entrée de l'électrolyseur (19).

7. Installation d'électrolyse selon la revendication 5 ou la revendication 6, caractérisée en ce qu'au moins un desdits dispositifs (50), de régulation est placé en amont du point de réunion des circuits de retour des dégazeurs respectifs (25-34).

8. Installation d'électrolyse selon la revendication 6, caractérisée en ce que la pompe (45) de circulation d'électrolyte équipant ladite installation est placée à l'entrée dudit dispositif de régulation (51) situé lui-même à l'entrée de l'électrolyseur (19).

9. Installation d'électrolyse selon l'une quelconque des revendications 1 à 8, caractérisée en ce qu'au moins un desdits dispositifs de commande de débits est en outre accouplé à un moteur d'entraînement.

10. Installation d'électrolyse selon l'une quelconque des revendications 5 à 9, caractérisée en ce qu'au moins un desdits dispositifs de régulation (50, 51) équipant les circuits de retour d'électrolyte est identique au circuit de régulation (49) équipant le circuit reliant l'électrolyseur au dégazeur.

**Claims**

1. Electrolysis installation of the type including at least one diaphragm electrolyser equipped with at least one outlet for the anolyte and at least one outlet for the catholyte each connected to a respective degasser, characterised in that it further includes, in each one of the circuits (24-33) connecting said outlets (20-21) to their respective degassers (25-34), a device of the volumetric pump type (49) for regulating the flow rate of the electrolyte, each control device (3) for the flow rate of anolyte being coupled to the corresponding device (2) for controlling the flow rate of catholyte, and vice-versa, by a linking arrangement (11) which brings about, for these two flow rate control devices, concomitant variations in the flow rates and the equalisation of pressures at both sides of said diaphragm.

2. Electrolysis installation in accordance with Claim 1, characterised in that said linking arrangement (11) is a mechanical connection.

3. Electrolysis installation in accordance with Claim 2, characterised in that each one of said control devices (2-3) for the flow rate includes at least one rotatable component and in that said linking arrangement is provided by at least one common shaft (11) having two rotatable components (4-6) corresponding to each flow rate control device.

4. Electrolysis installation in accordance with Claim 3, characterised in that each one of said devices for control of the flow rate includes at least two toothed wheels (4-5 ; 6-7) which mesh with each other and in that said mechanical coupling is constituted by at least one shaft that is common to the corresponding wheels of the device for controlling the flow rate of the anolyte and of the device for controlling the flow rate of the catholyte.

5. Electrolysis installation in accordance with any one of Claims 1 to 4, characterised in that, moreover, the circuits for return of the electrolyte from the degassers (25-34) towards the electrolyser (19) are equipped with one or several regulating devices (50-51) including, in each one of the electrolyte circuits located on the anolyte side and the catholyte side respectively, a flow rate control device, these two devices being coupled by a linkage which brings about concomitant variations in these.

6. Electrolysis installation in accordance with Claim 5, characterised in that at least one of said regulating devices (51) is inserted at the entry to the electrolyser (19).

7. Electrolysis installation in accordance with Claim 5 or Claim 6, characterised in that at least one of said regulating devices (50) is inserted upstream of the point of meeting of the return circuits from the respective degassers (25-34).

8. Electrolysis installation in accordance with Claim 6, characterised in that the pump (45) for circulating the electrolyte and equipping said installation is inserted at the entry to to said regulating device (51) which itself is located at the entry to the electrolyser (19).

9. Electrolysis installation in accordance with any one of Claims 1 to 8, characterised in that at least one of said flow rate control devices is additionally coupled to a drive motor.

10. Electrolysis installation in accordance with any one of Claims 5 to 9, characterised in that at least one of said regulating devices (50-51) equipping the circuits for return of electrolyte is identical to the regulating circuit (49) provided in the circuit connecting the electrolyser to the degasser.

## Ansprüche

1. Elektrolyseanlage, die wenigstens ein mit einer Membran versehenes Elektrolysegerät umfaßt, das wenigstens einen Auslaß für den Anolyten und wenigstens einen Auslaß für den Katholyten umfaßt, die jeweils mit einem entsprechenden Entgaser versehen sind, dadurch gekennzeichnet, daß die Anlage auf jeder der Leitungen (24-33), welche die Auslöser (20-21) mit ihren entsprechenden Entgasern (25-34) verbinden, eine volumetrische Pumpe bzw. Meßpumpe (49) für die Steuerung der abgegebenen Elektrolytmenge aufweist, wobei jede Steuervorrichtung (3) für die abgegebene Anolytmenge mit der entsprechenden Steuervorrichtung (2) für die abgegebene Katholytmenge und umgekehrt, mittels einer Verbindungseinrichtung (11) gekoppelt ist, die bei den beiden Abgabe- bzw. Mengensteuerungsvorrichtungen begleitende Veränderungen der abgegebenen Mengen und den Ausgleich der Drücke auf beiden Seiten der Membran bewirkt.

2. Elektrolyseanlage nach Anspruch 1, dadurch gekennzeichnet, daß die Verbindungseinrichtung (11) eine mechanische Verbindungseinrichtung ist.

3. Elektrolyseanlage nach Anspruch 2, dadurch gekenzeichnet, daß jede der Abgabe- bzw. Mengensteuerungsvorrichtungen (2-3) wenigstens ein Drehelement umfaßt und daß die Kopplungsverbindung mittels wenigstens einer gemeinsamen Welle (11) mit zwei entsprechenden Drehelementen (4-6) jeder Mengensteuerungsvorrichtung hergestellt wird.

4. Elektrolyseanlage nach Anspruch 3, dadurch gekennzeichnet, daß jede Abgabe- bzw. Mengensteuerungsvorrichtung wenigstens zwei Zahnräder (4-5 ; 6-7) umfaßt, die ineinander eingreifen und daß die mechanische Verbindung aus wenigstens einer gemeinsamen Welle für die entsprechenden Zahnräder der Anolytabgabe- bzw. -mengensteuerungsvorrichtung und der Katholytabgabe- bzw. -mengensteuerungsvorrichtung besteht.

5. Elektrolyseanlage nach einem der Ansprüche 1 bis 4, dadurch gekennzeichnet, daß die Elektrolytrückführungsleitungen von den Entgasern (25-34) zum Elektrolysegerät (19) mit einer oder mehreren Regeleinrichtungen (50-51) versehen sind, die auf jeder der Elektrolytleitungen auf der Anolytseite und auf der Katholytseite jeweils eine Abgabe- bzw. Mengensteuerungseinrichtung aufweisen, wobei die beiden Einrichtungen mittels einer Verbindungseinrichtung verbunden sind, welche begleitende Veränderungen bei ihnen bewirkt.

6. Elektrolyseanlage nach Anspruch 5, dadurch gekennzeichnet, daß wenigstens eine dieser Regeleinrichtungen (51) am Einlaß des Elektrolysegerätes (19) angeordnet ist.

7. Elektrolyseanlage nach Anspruch 5 oder 6, dadurch gekennzeichnet, daß wenigstens eine der Regeleinrichtungen (50) stromaufwärts vom Vereinigungspunkt der entsprechenden Entgaserrückführungsleitungen (25-34) angeordnet ist.

8. Elektrolyseanlage nach Anspruch 6, dadurch gekennzeichnet, daß die Elektrolytumwälzpumpe (45), mit welcher die Anlage versehen ist, am Einlaß der Regeleinrichtung (51) angeordnet ist, die ihrerseits am Einlaß des Elektrolysegerätes (19) angeordnet ist.

9. Elektrolyseanlage nach einem der Ansprüche 1 bis 8, dadurch gekennzeichnet, daß wenigstens eine der Abgabe- bzw. Mengensteuerungsvorrichtungen mit einem Antriebsmotor gekuppelt ist.

10. Elektrolyseanlage nach einem der Ansprüche 1 bis 9, dadurch gekennzeichnet, daß wenigstens eine der Regeleinrichtungen (50, 51), mit welchen die Elektrolytrückführungsleitungen versehen sind, mit der Regelleitung (49) ident ist, mit welcher die das Elektrolysegerät mit dem Entgaser verbindende Leitung versehen ist.

0 017 573

Fig. 1

Fig. 2

Fig.3

**Fig. 4**

**Fig . 5**